# EUROPÄISCHE PATENTSCHRIFT

(11) **EP 1 003 989 B1**
(45) Veröffentlichungstag und Bekanntmachung des Hinweises auf die Patenterteilung: **16.04.2003**
(21) Anmeldenummer: 98948825.9
(22) Anmeldetag: 12.08.1998
(51) Int. Cl.: F16K 31/00, F16K 15/18

(54) **SCHNELLSCHALTENDES VENTIL**
QUICK-ACTING VALVE
SOUPAPE A DECLENCHEMENT RAPIDE

(30) Priorität: 12.08.1997 DE 19734845
(43) Veröffentlichungstag der Anmeldung: 31.05.2000
(73) Patentinhaber: Deutsches Zentrum für Luft- und Raumfahrt e.V., 53175 Bonn (DE)
(72) Erfinder: NEUHAUS, Dietmar, D-40591 Düsseldorf (DE)
(74) Vertreter: Selting, Günther, Dipl.-Ing.
(86) Internationale Anmeldenummer: EP9805091
(87) Internationale Veröffentlichungsnummer: WO99008030

(56) Entgegenhaltungen:
- US-A- 3 884 417
- US-A- 3 995 813
- US-A- 4 684 104
- PATENT ABSTRACTS OF JAPAN vol. 018, no. 343 (P-1761), 28. Juni 1994 & JP 06 083460 A (TOYOTA MOTOR CORP), 25. März 1994

## Beschreibung

Die Erfindung betrifft ein schnellschaltendes Ventil mit den Merkmalen gemäß Oberbegriff von Auspruch 1, wie es beispielsweise aus der US-A-4 684 104 bekannt ist.

Für bestimmte Anwendungszwecke werden schnellschaltende Ventile benötigt, die im Stande sind, einen Fluidstrom schlagartig durchzulassen und die eine hohe Schaltfrequenz ermöglichen. Anwendungszwecke für solche Ventile sind beispielsweise Spektrometer, bei denen Gasproben von genau bemessenem Volumen einer spektrographischen Untersuchung unterzogen werden, die Beaufschlagung der Steuerdüsen von Satelliten und das Gebiet der Mikrosystemtechnik. Für derartige Anwendungen werden Ventile mit extrem kurzen Schaltzeiten und hoher Wiederholfrequenz benötigt.

Aus DE 38 35 788 A1 ist ein schnellschaltendes Kugelventil bekannt, das eine in einem Ventilsitz sitzende Kugel aufweist. Durch eine quer zum Ventilsitz wirkende Betätigungsvorrichtung kann die Kugel mit einem seitlichen Stoß vom Ventilsitz gelöst werden. Durch die daraufhin einsetzende Strömung wird die Kugel wieder auf den Ventilsitz zurückgeführt. Dieses schnellschaltende Ventil hat sich in der Praxis bewährt.

Aus der Zeitschrift O+P "Ölhydraulik und Pneumatik" 38 (1994) Nr. 9, S. 554-562 ist die Verwendung piezoelektrischer Aktoren für schnelle Stellantriebe bekannt. Piezoelektrische Aktoren werden beispielsweise für die Dosierantriebe für Flüssigkeiten benutzt, wobei der Aktor an einem Düsenrohr angebracht ist, aus dem die Flüssigkeit in einen Luftstrahl hinein austritt. Auf diese Weise lassen sich schnelle Dosiereinrichtungen für unterschiedliche Viskositäten und Tröpfchenraten realisieren.

In der Zeitschrift VDI-Z 119 (1977), Nr. 11-Juni (1), S. 569-570 ist ein Ventil zum Einspritzen von Kraftstoff beschrieben, bei dem ein piezoelektrischer Stab gedehnt und kontrahiert wird, um die Ventilöffnung nach einem Pulsdauer-Modulations-Verfahren zu steuern.

Der Erfindung liegt die Aufgabe zugrunde, ein schnellschaltendes Ventil zu schaffen, das bezüglich kurzer Schaltzeiten, hoher Wiederholfrequenz und bezüglich der die Lebensdauer begrenzenden Zykluszahl verbessert ist.

Die Lösung dieser Aufgabe erfolgt erfindungsgemäß mit den im Patentanspruch 1 angegebenen Merkmalen.

Bei dem erfindungsgemäßen Ventil ist der Ventilsitz mit einem Aktuator verbunden, der bei Betätigung den Ventilsitz bewegt und ihn von dem Ventilkörper mit einer so hohen Beschleunigung entfernt, daß der Ventilkörper nicht zu folgen vermag und vom Ventilsitz abhebt. Der Durchgang des Ventilsitzes wird für eine kurze definierte Zeit geöffnet, bis der Ventilkörper unter der Kraftwirkung des strömenden Mediums den Ventilsitz wieder erreicht und verschlossen hat. Anschließend bringt der Aktuator den mit dem Ventilkörper verschlossenen Ventilsitz wieder in die Ausgangsstellung, so daß der nächste Zyklus durchgeführt werden kann.

Das erfindungsgemäße schnellschaltende Ventil kann so ausgebildet werden, daß sich kurze Schaltzeiten in der Größenordnung von 100 µs und kleiner ergeben. In der Praxis wurden Wiederholfrequenzen von 400 bis 1000 Hz erreicht. Die Ansprechgeschwindigkeit und die Wiederholfrequenz hängen natürlich von der Baugröße des Ventils und insbesondere auch von der Masse des Ventilkörpers ab. Der Ventilkörper sollte eine geringe Dichte haben, so daß seine Masse klein ist. Der Ventilkörper kann beispielsweise als Hohlkörper ausgebildet sein.

Das erfindungsgemäße Ventil ist insbesondere zum Schalten von Gasen vorgesehen. Es kann aber auch zum Schalten von Flüssigkeiten benutzt werden. Das Ventil eignet sich z. B. für die Kraftstoffeinspritzung bei Verbrennungsmotoren.

Der den Ventilkörper tragende Aktuator ist vorzugsweise als piezoelektrischer Kontraktionskörper ausgebildet, der sich auf ein Betätigungssignal hin zusammenzieht. Alternativ kann der Aktuator auch z. B. elektromagnetisch arbeiten. Wichtig ist, daß für eine kurze Zeit eine hohe Beschleunigung des Ventilsitzes erreicht wird, die größer ist als die Beschleunigung des unter der Einwirkung des Mediendruckes stehenden Ventilkörpers.

Ein besonderer Vorteil des erfindungsgemäßen Ventils besteht in dem geringen Verschleiß an Ventilkörper und Ventilsitz. Da der Ventilsitz sich in axialer Richtung von dem Ventilkörper entfernt und anschließend den Ventilkörper aus axialer Richtung wieder auffängt, verteilen sich die Stoßkräfte ringförmig auf den Ventilsitz und den Ventilkörper. Zur weiteren Verringerung des Verschleißes ist gemäß einer bevorzugten Ausführungsform der Erfindung der Aktuator derart gesteuert, daß er auf das Betätigungssignal hin den Ventilsitz erst schnell und danach langsamer bewegt, um die zunächst von dem Ventilsitz abgehobene Kugel weich abzufangen.

Als Ventilkörper kann eine Kugel verwendet werden. Die Erfindung ist hierauf jedoch nicht beschränkt. Auch ein kegelförmig oder ähnlich gestalteter Ventilkörper ist möglich.

Im folgenden werden unter Bezugnahme auf die Zeichnungen Ausführungsbeispiele der Erfindung näher erläutert.

Es zeigen:
- Fig. 1: einen schematischen Längsschnitt durch ein schnellschaltendes Ventil nach der Erfindung,
- Fig. 2: eine Schnittdarstellung des Aktuators,
- Fig. 3: ein Zeitdiagramm der Bewegung des Ventilsitzes nach einem Betätigungssignal,
- Fig. 4: ein zweites Ausführungsbeispiel des den Ventilkörper enthaltenden Raumes,
- Fig. 5: ein weiteres Ausführungsbeispiel des erfindungsgemäßen Ventils und
- Fig. 6: ein Ausführungsbeispiel, bei dem der Aktuator in der Ebene des Ventilsitzes wirkt.

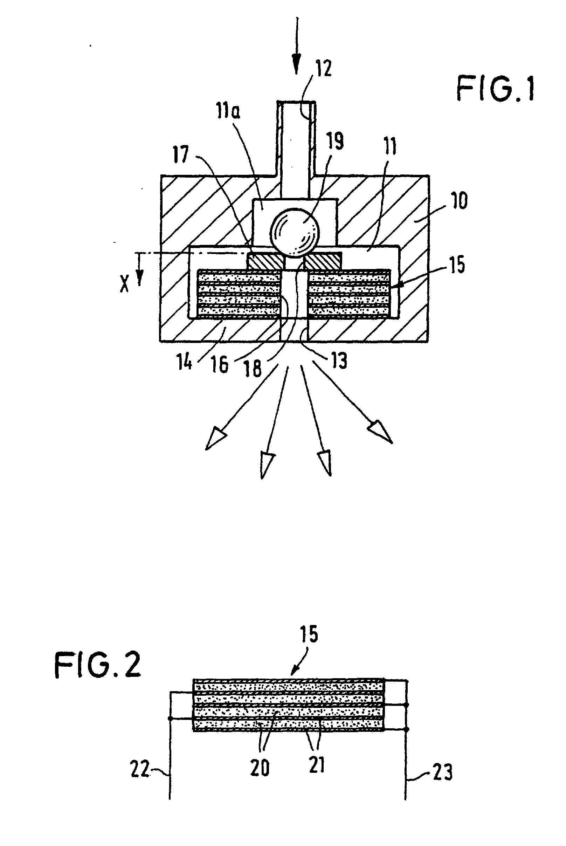

Das Ventil weist gemäß Fig. 1 ein Gehäuse 10 auf, das einen Raum 11 umschließt, welcher gegen die Umgebung abgeschlossen ist. Der Raum 11 weist eine Zuströmöffnung 12 und eine Abströmöffnung 13 auf, die entlang einer gemeinsamen Achse angeordnet sind. Die Zuströmöffnung 12 ist an eine (nicht dargestellte) Druckquelle für das zu beschaltende Medium angeschlossen, während die Abströmöffnung 13 mit dem Verbraucher in Verbindung steht.

Auf der die Abströmöffnung 13 umgebenden Bodenwand 14 des Gehäuses 10 ist ein Aktuator 15 angeordnet, durch den ein Abströmkanal 16 hindurchgeht, welcher mit der Abströmöffnung 13 in Verbindung steht. Auf dem Aktuator 15 ist ein Ventilsitz 17 befestigt. Dieser besteht aus einer Scheibe, vorzugsweise aus Metall, die mit einer zentrischen Durchlaßöffnung 18 versehen ist. Auf dieser Durchlaßöffnung 18 sitzt der Ventilkörper 19, der hier als Kugel ausgebildet ist, in der Weise, daß der Durchgang durch die Durchlaßöffnung abdichtend verschlossen wird. Der Ventilsitz 17 und der Aktuator 15 bilden eine mit dem Gehäuse 10 abdichtend verbundene Einheit. Der Ventilkörper 19 ist koaxial zu dem Zuströmkanal 12 angeordnet und er befindet sich in einem Fortsatz des Raumes 11, der als Aufnahmekammer 11a für den Ventilkörper 19 dient. Der Durchmesser der Aufnahmekammer 11a beträgt maximal das 5fache des Durchmessers des Ventilkörpers 19. Dadurch wird sichergestellt, daß eine durch die Aufnahmekammer 11a hindurchgehende Strömung den Ventilkörper 19 aus jeder Position heraus auf die Durchlaßöffnung 18 zentriert, so daß der Ventilkörper unter der Wirkung der Fluidströmung in seine Schließstellung befördert wird.

In Fig. 2 ist schematisch ein Schnittbild durch den Aktuator 15 dargestellt. Es handelt sich um einen piezoelektrischen Kontraktionskörper, der aus mehreren parallelen piezoelektrischen Schichten 20 besteht, zwischen denen dünne metallische Bleche 21 angeordnet sind. Jedes zweite Blech 21 ist mit einer ersten elektrischen Leitung 22 verbunden und die dazwischenliegenden Bleche sind mit einer zweiten elektrischen Leitung 23 verbunden. Auf diese Weise werden mehrere Kondensatoren mit piezoelektrischem Material als Dielektrikum gebildet. Wenn an die Leitungen 22 und 23 eine Spannung gelegt wird, dehnen sich die piezoelektrischen Schichten 20 aus. Wird die Spannung verringert oder abgeschaltet, ziehen sich diese Schichten wieder zusammen.

Das Ventil nach Fig. 1 arbeitet wie folgt: Im Ruhezustand ist an die Leitungen 22,23 des Aktuators 15 eine Spannung gelegt, die bewirkt, daß der Aktuator im ausgedehnten Zustand ist. Dadurch wird der Ventilsitz 17 innerhalb des Raumes 11 in einer bestimmten Höhe gehalten. Der Ventilkörper 19 versperrt die Durchlaßöffnung 18 des Ventilsitzes, so daß das an der Zuströmöffnung 12 unter Druck anstehende Medium nicht zur Abströmöffnung 13 gelangen kann. Auf ein Betätigungssignal hin wird die Spannung am Aktuator 15 verringert, so daß dieser sich in axialer Richtung zusammenzieht. Hierdurch wird der Ventilsitz 17 von dem Ventilkörper 19 in axialer Richtung wegbewegt. Der Ventilkörper 19 verharrt in Folge seiner Massenträgheit in der zuvor eingenommenen Position. Dadurch wird die Durchlaßöffnung 18 des Ventilsitzes 17 geöffnet und das Fluid kann nunmehr den Ventilkörper 19 umströmen und durch die Durchlaßöffnung 18 das Ventil durchströmen. Durch die Wirkung dieser Strömung wird der Ventilkörper 19 in Richtung auf den Ventilsitz 17 bewegt, um anschließend die Durchlaßöffnung 18 wieder zu verschließen. Nachdem der Ventilkörper 19 den Ventilsitz 17 erreicht hat, dehnt sich der Aktuator 15 wieder aus, so daß Ventilsitz und Ventilkörper in die in Fig. 1 dargestellte Ausgangsposition zurückversetzt werden.

Das Ventil arbeitet nicht nur in der in Fig. 1 gestellten senkrechten Position, sondern in jeder beliebigen anderen Orientierung. Dies liegt daran, daß die Strömungskräfte, die den Ventilkörper 19 auf den Ventilsitz 17 zurückführen, bei einer hinreichenden Druckdifferenz zwischen der Zuströmung 12 und der Abströmung 13, weitaus größer sind als die Schwerkraftwirkung.

Abweichend von dem Ausführungsbeispiel nach Fig. 1 ist es auch möglich, den Aktuator 15 an der Oberseite der Gehäusewand anzuordnen und den Ventilsitz 17 an der Unterseite des Aktuators anzubringen. In diesem Fall wird der Aktuator zum Wegbewegen des Ventilsitzes 17 vom Ventilkörper 19 vorübergehend expandiert.

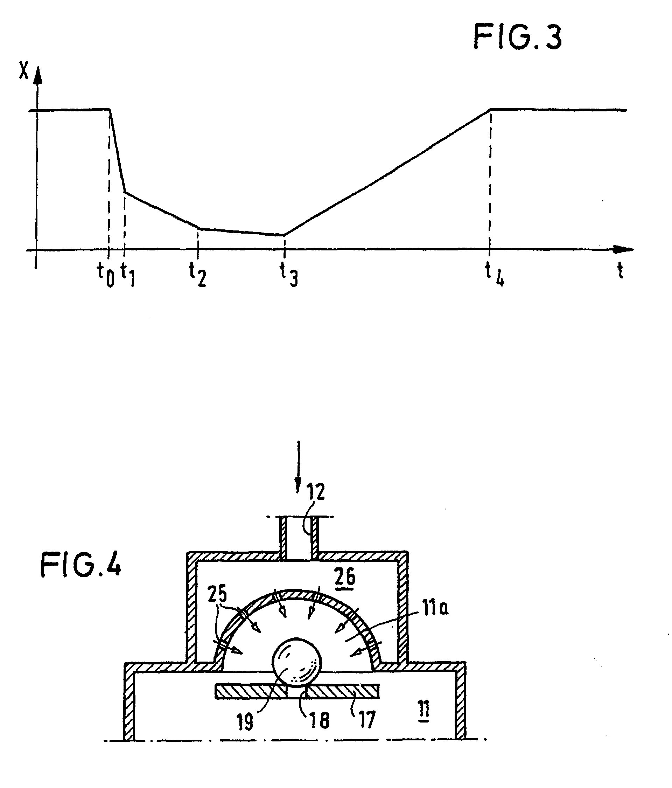

Die Steuerung des Aktuators 15 erfolgt durch ein (nicht dargestelltes) Steuergerät, dem das Betätigungssignal zugeführt wird. In Fig. 3 ist längs der Ordinate die Position x dargestellt, die der Ventilsitz 17 in axialer Richtung im Gehäuse 10 einnimmt. Längs der Abszisse ist die Zeit t aufgetragen. Zum Zeitpunkt t₀ wird das Betätigungssignal erzeugt. Dieses bewirkt, daß der Aktuator 15 sich schnell zusammenzieht, bis der Zeitpunkt t₁ erreicht ist. Die Zeit zwischen t₀ und t₁ bildet die Öffnungszeit des Ventils. Anschließend wird der Aktuator 15 in einem Abfangbereich, der bis zum Zeitpunkt t₂ dauert, weiter kontrahiert, jedoch mit erheblich geringerer Geschwindigkeit. In dem Abfangbereich der von t₁ bis t₂ dauert, wird der Ventilkörper 19 von dem Ventilsitz 17 sanft aufgefangen, so daß ein harter Aufprall vermieden und der Verschleiß herabgesetzt wird. Zum Zeitpunkt t₃ beginnt die Rückführphase, in der sich der Aktuator 15 langsam wieder ausdehnt, um zum Zeitpunkt t₄ seine Ausgangsstellung wieder zu erreichen. Dann ist das Ventil für einen neuen Öffnungszyklus bereit.

In Fig. 4 ist ein weiteres Ausführungsbeispiel des Ventils dargestellt, bei dem gegenüber Fig. 1 die Form der den Ventilkörper 19 enthaltenden Aufnahmekammer 11a verändert ist. Die Aufnahmekammer 11a ist hier als Sphäre bzw. Halbsphäre ausgebildet, deren Mittelpunkt sich annähernd im Mittelpunkt der Ventilkugel befindet, wenn diese auf dem Sitz 17 sitzt. In der Wand der Aufnahmekammer sind gleichmäßig verteilt Öffnungen 25 angeordnet, durch die das Medium in Richtung auf die Kugel strömen kann.

Die Zuströmöffnung 11 führt zunächst in eine Verteilerkammer 26, aus der das Medium durch die Öffnungen 25 abströmt. Die sphärische Ausbildung der Aufnahmekammer 11a hat den Vorteil einer noch besseren Zentrierung des Ventilkörpers 19 auf die Durchlaßöffnung 18 des Ventilsitzes. Die Ventilkammer 11a begrenzt die Bewegung des Ventilkörpers 19 und stellt durch ihre Form und Größe sicher, daß eine durch die Durchlaßöffnung 18 hindurchgehende Strömung den Ventilkörper 19 in die Schließstellung zurückführt.

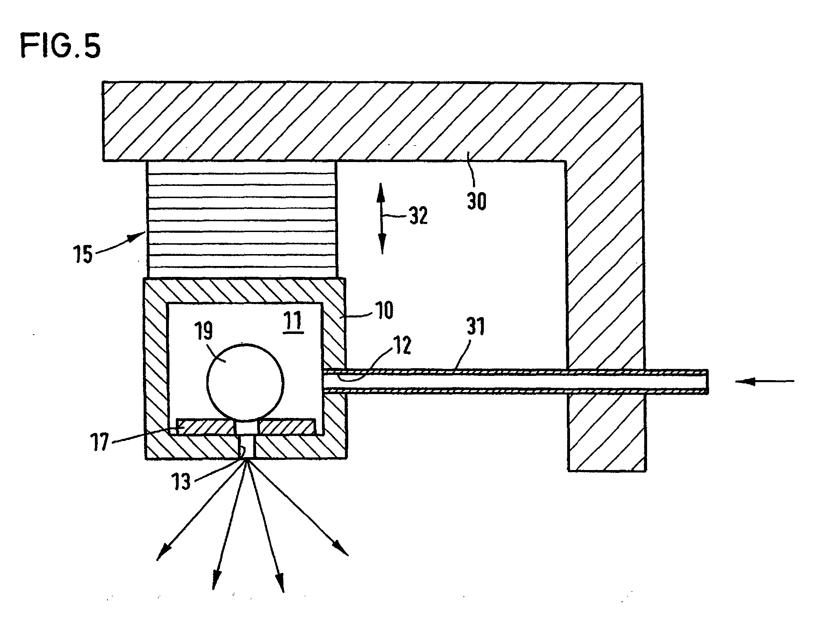

Bei dem Ausführungsbeispiel von Fig. 5 ist der Aktuator 15 außerhalb des Gehäuses 10 angeordnet. Das Gehäuse 10 ist an dem Aktuator 15 befestigt, der seinerseits an einer ortsfesten Halterung 30 angebracht ist. In dem Gehäuse 10 befindet sich der Ventilsitz 17, der in diesem Fall mit dem Gehäuse fest verbunden ist.

Die Zuströmöffnung 12 ist mit einer flexiblen Leitung 31 verbunden, weil bei diesem Ausführungsbeispiel das gesamte Gehäuse 10 bewegbar an dem Aktuator 15 aufgehängt ist. Bei Betätigung des Aktuators 15 wird das Gehäuse 10 mit dem darin enthaltenen Ventilsitz 17 in Richtung des Doppelpfeiles 32 bewegt.

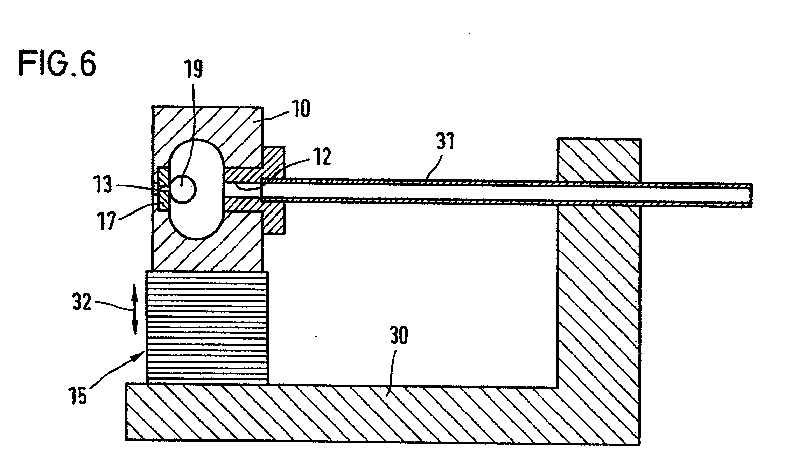

Bei dem Ausführungsbeispiel von Fig. 6 ist der Aktuator 15 ebenfalls an einer ortsfesten Halterung 30 angebracht und er bewegt das Gehäuse 10 in vertikaler Richtung. In dem Gehäuse 10 ist der Ventilsitz 17 derart angeordnet, daß seine Sitzfläche parallel zur Bewegungsrichtung 32 des Aktuators 15 verläuft. Bei Betätigung des Aktuators 15 wird der Ventilsitz 17 in seiner Ebene parallelverschoben, ohne daß die Kugel 19 dieser schnellen Verschiebung folgen kann. Erst infolge der danach eintretenden Strömung durch die Abströmöffnung 13 wird die Kugel 19 wieder in die Schließstellung auf dem Sitz 17 bewegt. Wie in Fig. 6 dargestellt ist, funktioniert dieses Ventil selbst bei vertikal ausgerichtetem Sitz. Der Sitz 13 kann natürlich auch horizontal ausgerichtet sein.

## Patentansprüche

1. Schnellschaltendes Ventil mit einem Raum (11), der eine Zuströmöffnung (12) und eine Abströmöffnung (13) aufweist und einen Ventilsitz (17) enthält, welcher von einem bewegbaren Ventilkörper (19) verschließbar ist und von einem Aktuator (15) getragen ist, der auf ein Betätigungssignal hin den Ventilsitz (17) bewegt,
**dadurch gekennzeichnet,**
**daß** der Aktuator (15) derart gesteuert ist, daß er den Ventilsitz (17) von dem in der Verschlußstellung befindlichen Ventilkörper (19) wegbewegt, wobei diese Bewegung schneller erfolgt, als der Ventilkörper (19) zu folgen vermag.

2. Schnellschaltendes Ventil nach Anspruch 1, **dadurch gekennzeichnet, daß** durch den Aktuator (15) ein Abströmkanal (16) hindurchgeht.

3. Schnellschaltendes Ventil nach Anspruch 1 oder 2, **dadurch gekennzeichnet, daß** der Aktuator (15) ein piezoelektrischer Körper ist.

4. Schnellschaltendes Ventil nach Anspruch 3, **dadurch gekennzeichnet, daß** der Körper mehrere Schichten (20) aus Piezomaterial mit dazwischenangeordneten Elektrodenschichten (21) enthält.

5. Schnellschaltendes Ventil nach einem der Ansprüche 1 bis 4, **dadurch gekennzeichnet, daß** der Aktuator (15) derart gesteuert ist, daß er auf das Betätigungssignal hin den Ventilsitz (17) erst schnell und dann langsamer bewegt, um den zunächst von dem Ventilsitz (17) abgehobenen Ventilkörper (19) weich abzufangen.

6. Schnellschaltendes Ventil nach einem der Ansprüche 1-5, **dadurch gekennzeichnet, daß** die Bewegungsrichtung des Aktuators (15) quer zur Ebene des Ventilsitzes (17) verläuft.

7. Schnellschaltendes Ventil nach einem der Ansprüche 1-5, **dadurch gekennzeichnet, daß** die Bewegungsrichtung des Aktuators (15) parallel zur Ebene des Ventilsitzes (17) verläuft.

## Claims

1. Quick-acting valve comprising a chamber (11) having an inlet opening (12) and an outlet opening (13) and containing a valve seat (17) which is adapted to be closed by a movable valve body (19) and is supported by an actuator (15) which moves the valve seat (17) in response to an actuating signal,
**characterized in that**
the actuator (15) is controlled such that it moves the valve seat (17) away from the valve body (19) situated in the closed position, with this movement being effected so rapidly that the valve body (19) is not capable of following.

2. Quick-acting valve according to claim 1, **characterized in that** an outlet duct (16) passes through the actuator (15).

3. Quick-acting valve according to claim 1 or 2, **characterized in that** the actuator (15) is a piezoelectric body.

4. Quick-acting valve according to claim 3, **characterized in that** the body is made up of a plurality of layers (20) of piezoelectric material with intermediate electrode layers (21).

5. Quick-acting valve according to one of claims 1 to 4, **characterized in that** the actuator (15) is controlled such that, in response to the actuating signal, it first moves the valve seat (17) rapidly and then more and more slowly in order to smoothly take up the valve body (19) lifted off the valve seat (17).

6. Quick-acting valve according to one of claims 1 to 5, **characterized in that** the direction of movement of the actuator (15) extends transversely to the plane of the valve seat (17).

7. Quick-acting valve according to one of claims 1 to 5, **characterized in that** the direction of movement of the actuator (15) extends in parallel to the plane of the valve seat (17).

## Revendications

1. Soupape à déclenchement rapide comportant un espace (11) qui présente une ouverture d'admission (12) et une ouverture d'évacuation (13) et qui contient un siège de soupape (17), lequel peut être fermé par un corps de soupape (19) mobile et est porté par un actionneur (15) qui, suite à un signal d'actionnement, déplace le siège de soupape (17), **caractérisée en ce que** l'actionneur (15) est commandé de telle sorte qu'il éloigne le siège de soupape (17) du corps de soupape (19) se trouvant dans la position de fermeture, ce mouvement étant exécuté plus vite que le corps de soupape (19) ne peut suivre.

2. Soupape à déclenchement rapide selon la revendication 1, **caractérisée en ce que** l'actionneur (15) est traversé par un canal d'évacuation (16).

3. Soupape à déclenchement rapide selon la revendication 1 ou 2, **caractérisée en ce que** l'actionneu (15) est un corps piézoélectrique.

4. Soupape à déclenchement rapide selon la revendication 3, **caractérisée en ce que** le corps contient plusieurs couches (20) en un matériau piézoélectrique avec des couches d'électrodes intercalées.

5. Soupape à déclenchement rapide selon l'une des revendications 1 à 4, **caractérisée en ce que** l'actionneur (15) est commandé de telle sorte que, suite au signal d'actionnement, il déplace le siège de soupape (17) d'abord rapidement puis plus lentement pour récupérer doucement le corps de soupape (19) préalablement soulevé du siège de soupape (17).

6. Soupape à déclenchement rapide selon l'une des revendications 1 à 5, **caractérisée en ce que** le sens du mouvement de l'actionneur (15) s'étend transversalement par rapport au plan du siège de soupape (17).

7. Soupape à déclenchement rapide selon l'une des revendications 1 à 5, **caractérisée en ce que** le sens du mouvement de l'actionneur (15) s'étend parallèlement au plan du siège de soupape (17).
